# EUROPÄISCHE PATENTANMELDUNG

(11) **EP 2 105 631 A1**
(43) Veröffentlichungstag der Anmeldung: **30.09.2009**
(21) Anmeldenummer: 09155839.5
(22) Anmeldetag: 23.03.2009
(51) Int. Cl.: F16F 15/16

(54) **Torsionsschwingungsdämpferanordnung, insbesondere für den Antriebsstrang eines Fahrzeugs**

(30) Priorität: 27.03.2008 DE 102008015817
(71) Anmelder: ZF Friedrichshafen AG, 88038 Friedrichshafen (DE)
(72) Erfinder: Kopp, Mathias, 96052, Bamberg (DE)

(57) **Zusammenfassung**

Eine Torsionsschwingungsdämpferanordnung, insbesondere für den Antriebsstrang eines Fahrzeugs, umfasst eine Primärseite (16) und eine über eine Dämpferfluidanordnung mit der Primärseite (16) zur Drehung um eine Drehachse (A) und zur Relativdrehung bezüglich einander gekoppelte Sekundärseite (24), wobei die Dämpferfluidanordnung ein ein Drehmoment zwischen der Primärseite (16) und der Sekundärseite (24) übertragendes erstes Dämpferfluid mit geringerer Kompressibilität in einer ersten Dämpferfluidkammeranordnung (36) umfasst sowie ein bei Druckerhöhung des ersten Dämpferfluids in der ersten Dämpferfluidkammeranordnung (36) belastetes zweites Dämpferfluid mit höherer Kompressibilität in einer zweiten Dämpferfluidkammeranordnung (76) umfasst, wobei die zweite Dämpferfluidkammeranordnung (76) wenigstens eine Kammereinheit (46) und in Zuordnung zu dieser ein das erste Dämpferfluid von dem zweiten Dämpferfluid trennendes und bei Druckveränderung in der Kammereinheit (46) verlagerbares Trennelement (48) umfasst, wobei die erste Dämpferfluidkammeranordnung (36) wenigstens eine Druckkammer (32', 32", 34', 34") mit bei Relativdrehung der Primärseite (14) bezüglich der Sekundärseite (24) veränderbarem Volumen und in Zuordnung zu dieser eine Verbindungskammer (60, 62, 64, 66) umfasst zur Aufnahme von bei Verringerung des Volumens der wenigstens einen Druckkammer (32', 32", 34', 34") aus dieser verdrängtem erstem Dämpferfluid zur Beaufschlagung des Trennelements (48) der wenigstens einen Kammereinheit (46), wobei im Strömungsweg zwischen der wenigstens einen Druckkammer (32', 32", 34', 34") und der dieser zugeordneten Verbindungskammer (60, 62, 64, 66) eine Drosseleinheit (120) mit in Abhängigkeit von einer Volumenänderungder wenigstens einen Druckkammer (32', 32", 34', 34") veränderbarer Drosselwirkung vorgesehen ist.

## Beschreibung

Die vorliegende Erfindung betrifft eine Torsionsschwingungsdämpferanordnung, insbesondere für den Antriebsstrang eines Fahrzeugs, umfassend eine Primärseite und eine über eine Dämpferfluidanordnung mit der Primärseite zur Drehung um eine Drehachse und zur Relativdrehung bezüglich einander gekoppelte Sekundärseite, wobei die Dämpferfluidanordnung ein ein Drehmoment zwischen der Primärseite und der Sekundärseite übertragendes erstes Dämpferfluid mit geringerer Kompressibilität in einer ersten Dämpferfluidkammeranordnung umfasst sowie ein bei Druckerhöhung des ersten Dämpferfluids in der ersten Dämpferfluidkammeranordnung belastetes zweites Dämpferfluid mit höherer Kompressibilität in einer zweiten Dämpferfluidkammeranordnung umfasst, wobei die zweite Dämpferfluidkammeranordnung wenigstens eine Kammereinheit und in Zuordnung zu dieser ein das erste Dämpferfluid von dem zweiten Dämpferfluid trennendes und bei Druckveränderung in der Kammereinheit verlagerbares Trennelement umfasst, wobei die erste Dämpferfluidkammeranordnung wenigstens eine Druckkammer mit bei Relativdrehung der Primärseite bezüglich der Sekundärseite veränderbarem Volumen und in Zuordnung zu dieser eine Verbindungskammer umfasst zur Aufnahme von bei Verringerung des Volumens der wenigstens einen Druckkammer aus dieser verdrängtem erstem Dämpferfluid zur Beaufschlagung des Trennelements der wenigstens einen Kammereinheit.

Eine derartige Torsionsschwingungsdämpferanordnung ist beispielsweise aus der nachveröffentlichten deutschen Patentanmeldung 10 2006 061 342 bekannt. Bei dieser bekannten Torsionsschwingungsdämpferanordnung sind für den Zugzustand, also eine Drehmomentübertragung von einem Antriebsaggregat auf angetriebene Räder eines Fahrzeugs, und für den Schubzustand, also eine Drehmomentübertragung von den Antriebsrädern in Richtung Antriebsaggregat, jeweils zwei parallel wirkende Druckkammern und diesen zugeordnete Verbindungskammern vorgesehen. Über die Verbindungskammern können jeweils Trennelemente mehrerer Kammereinheiten durch das aus einer Verdrängungskammer verdrängte erste Dämpferfluid belastet werden, wenn eine zugehörige Verdrängungskammer durch Relativdrehung der Primärseite bezüglich der Sekundärseite in ihrem Volumen verringert wird.

Treten bei derartigen Torsionsschwingungsdämpferanordnungen sehr hohe Relativdrehgeschwindigkeiten auf, was eine entsprechend schnelle Verdrängung von erstem Dämpferfluid beispielsweise aus den beiden dem Zugbetrieb zugeordneten Druckkammern mit sich bringt, so kann einer übermäßigen Relativverdrehung mit der Gefahr des gegenseitigen Anschlagens der Primärseite und der Sekundärseite dadurch versucht werden, entgegenzuwirken, dass durch eine beispielsweise außerhalb der Torsionsschwingungsdämpferanordnung liegende Quelle für unter Druck stehendes erstes Dämpferfluid dieses in die beiden in ihren Volumen verringerten Druckkammern nachgeführt wird, so dass die Relativdrehung durch ansteigenden Druck des ersten Dämpferfluids in diesen Druckkammern abgebremst wird. Dies erfordert jedoch eine entsprechend schnelle Zufuhr von unter Druck stehendem ersten Dämpferfluid, was aufgrund der bei derartigen Druckfluidquellen vorhandenen Trägheiten, beispielsweise eines zu schaltenden Ventils, jedoch häufig nicht möglich ist.

Es ist die Aufgabe der vorliegenden Erfindung, eine Torsionsschwingungsdämpferanordnung, insbesondere für den Antriebsstrang eines Fahrzeugs, derart auszugestalten, dass in einfacher Art und Weise einer übermäßigen Relativdrehung zwischen Primärseite und Sekundärseite entgegengewirkt wird.

Erfindungsgemäß wird diese Aufgabe gelöst durch eine Torsionsschwingungsdämpferanordnung, insbesondere für den Antriebsstrang eines Fahrzeugs, umfassend eine Primärseite und eine über eine Dämpferfluidanordnung mit der Primärseite zur Drehung um eine Drehachse und zur Relativdrehung bezüglich einander gekoppelte Sekundärseite, wobei die Dämpferfluidanordnung ein ein Drehmoment zwischen der Primärseite und der Sekundärseite übertragendes erstes Dämpferfluid mit geringerer Kompressibilität in einer ersten Dämpferfluidkammeranordnung umfasst sowie ein bei Druckerhöhung des ersten Dämpferfluids in der ersten Dämpferfluidkammeranordnung belastetes zweites Dämpferfluid mit höherer Kompressibilität in einer zweiten Dämpferfluidkammeranordnung umfasst, wobei die zweite Dämpferfluidkammeranordnung wenigstens eine Kammereinheit und in Zuordnung zu dieser ein das erste Dämpferfluid von dem zweiten Dämpferfluid trennendes und bei Druckveränderung in der Kammereinheit verlagerbares Trennelement umfasst, wobei die erste Dämpferfluidkammeranordnung wenigstens eine Druckkammer mit bei Relativdrehung der Primärseite bezüglich der Sekundärseite veränderbarem Volumen und in Zuordnung zu dieser eine Verbindungskammer umfasst zur Aufnahme von bei Verringerung des Volumens der wenigstens einen Druckkammer aus dieser verdrängtem erstem Dämpferfluid zur Beaufschlagung des Trennelements der wenigstens einen Kammereinheit, wobei im Strömungsweg zwischen der wenigstens einen Druckkammer und der dieser zugeordneten Verbindungskammer eine Drosseleinheit mit in Abhängigkeit von einer Volumenänderung der wenigstens einen Druckkammer veränderbarer Drosselwirkung vorgesehen ist.

Bei der erfindungsgemäßen Torsionsschwingungsdämpferanordnung ist also zumindest eine Drosseleinheit vorgesehen, welche dafür sorgt, dass in Abhängigkeit von der Volumenänderung einer Druckkammer, welche auch abhängig ist von der Relativdrehgeschwindigkeit zwischen Primärseite und Sekundärseite, das aus einer Druckkammer verdrängte erste Dämpferfluid mehr oder weniger stark gedrosselt in eine Verbindungskammer strömen kann und mithin auch einer Relativdrehung zwischen der Primärseite und der Sekundärseite ein mehr oder weniger großer Widerstand entgegengesetzt wird. Insbesondere dann, wenn dabei vorgesehen ist, dass die Drosseleinheit bei geringerer Volumenänderung eine geringere Drosselwirkung aufweist und bei größerer Volumenänderung eine größere Drosselwirkung aufweist, wird es möglich, im Bereich normaler Drehmomentschwankungen, welche mit vergleichsweise geringer Relativverdrehung bzw. auch Relativdrehgeschwindigkeit zwischen Primärseite und Sekundärseite ablaufen, mit geringerer Drosselwirkung zu arbeiten, so dass für diesen normalen Betriebszustand auch eine sehr gute Entkopplungsqualität zwischen Primärseite und Sekundärseite erreicht wird. Nimmt die Relativdrehung zu, nimmt auch die Drosselwirkung zu, was dazu führt, dass erstes Dämpferfluid weniger schnell aus der belasteten Druckkammer ausströmen kann. Dies wiederum führt dazu, dass der Relativdrehung zwischen Primärseite und Sekundärseite ein größerer Widerstand entgegengesetzt wird und somit die Gefahr, dass diese beiden Baugruppen sich übermäßig stark gegeneinander verdrehen und in gegenseitigen Anschlag gelangen, praktisch eliminiert ist.

Dabei kann beispielsweise vorgesehen sein, dass die Drosseleinheit im Wesentlichen zwischen einer geringeren Drosselwirkung und einer größeren Drosselwirkung schaltbar ist. Im normalen Drehmomentübertragungs- bzw. Drehschwingungsdämpfungsbetrieb kann das System dann mit einer geringeren Drosselwirkung arbeiten. Übersteigt die Relativdrehung zwischen Primärseite und Sekundärseite ein gewisses Maß, kann dann mit der größeren Drosselwirkung gearbeitet und die Relativdrehgeschwindigkeit verringert werden.

Bei einer baulich sehr einfach zu realisierenden Ausgestaltungsform kann der Wechsel zwischen verschiedenen Drosselwirkungen dadurch erreicht werden, dass die Drosseleinheit einen wenigstens eine erste Drosselöffnung mit größerem Drosselquerschnitt aufweisenden Drosselkörper umfasst und ein bezüglich des Drosselkörpers verlagerbares Drosselelement mit einer zweiten Drosselöffnung mit kleinerem Drosselquerschnitt umfasst, wobei das Drosselelement die wenigstens eine erste Drosselöffnung freigibt zur Bereitstellung einer im Wesentlichen durch den Drosselquerschnitt der wenigstens einen ersten Drosselöffnung definierten geringeren Drosselwirkung, oder überdeckt zur Bereitstellung einer im Wesentlichen durch den Drosselquerschnitt der zweiten Drosselöffnung definierten größeren Drosselwirkung.

Um dafür zu sorgen, dass im normalen Schwingungsdämpfungszustand die wenigstens eine Drosseleinheit mit ihrer geringeren Drosselwirkung arbeiten kann, wird weiter vorgeschlagen, dass dem Drosselelement eine Vorspannanordnung zugeordnet ist zum Vorspannen desselben in eine die wenigstens eine erste Drosselöffnung freigebende Positionierung. Durch eine relativdrehgeschwindigkeitsabhängig sich aufbauende Druckdifferenz kann dann entgegen der Wirkung der Vorspannanordnung das Drosselelement bewegt werden, so dass es in den Zustand gelangt, in welchem es die wenigstens eine erste Drosselöffnung überdeckt.

Um in beiden Relativdrehrichtungen eine entsprechende Funktionalität der wenigstens einen Drosseleinheit erlangen zu können, wird weiter vorgeschlagen, dass der Drosselkörper zwei erste Drosselöffnungen aufweist, wobei dann, wenn das Volumen der wenigstens einen Druckkammer abnimmt, das Drosselelement mit einer der ersten Drosselöffnungen zum Erhöhen der Drosselwirkung zusammenwirken kann, und dann, wenn das Volumen der wenigstens einen Druckkammer zunimmt, das Drosselelement mit der anderen ersten Drosselöffnung zum Erhöhen der Drosselwirkung zusammenwirken kann. Dies bedeutet, dass auch dann, wenn das Volumen einer Druckkammer stark vergrößert wird, das Zurückströmen von erstem Dämpferfluid aus einer Verbindungskammer in eine Druckkammer durch eine entsprechend große Drosselwirkung erschwert wird und auch dadurch ein Abbremseffekt generiert wird.

Beispielsweise kann vorgesehen sein, dass der Drosselkörper ein das Drosselelement verschiebbar aufnehmender Hohlkörper ist, der in Verschieberichtung an beiden Endbereichen jeweils eine erste Drosselöffnung aufweist.

Wie vorangehend dargelegt, kann der wenigstens einen Druckkammer eine Quelle für unter Druck stehendes erstes Dämpferfluid zugeordnet sein. In Verbindung mit dem Vorsehen einer Drosseleinheit ist dies besonders daher vorteilhaft, da aufgrund der durch die Drosseleinheit generierten Abbremswirkung für eine derartige Quelle mehr Zeit zur Verfügung steht, um durch entsprechenden Druckaufbau der weitergehenden Drehung zwischen Primärseite und Sekundärseite entgegenzuwirken und diese beispielsweise wieder in Richtung Neutral-Relativdrehlage zurück zu bewegen.

Beispielsweise kann vorgesehen sein, dass in Strömungsrichtung von der wenigstens einen Druckkammer zu der zugeordneten Verbindungskammer die Quelle für unter Druck stehendes erstes Dämpferfluid vor der Drosseleinheit mit der wenigstens einen Druckkammer verbunden oder verbindbar ist. Dies ist eine besonders effizient wirkende Ausgestaltung, da dann der durch die Quelle bereitgestellte erhöhte Druck unmittelbar dort wirkt, wo er zum Abbremsen der Relativdrehbewegung erforderlich ist.

Alternativ ist es möglich, dass in Strömungsrichtung von der wenigstens einen Druckkammer zu der zugeordneten Verbindungskammer die Quelle für unter Druck stehendes erstes Dämpferfluid nach der Drosseleinheit mit der wenigstens einen Druckkammer verbunden oder verbindbar ist.

Mit derartigen Torsionsschwingungsdämpferanordnungen werden primär Drehmomente von einem Antriebsaggregat in Richtung zu angetriebenen Rädern übertragen. Da vor allem ein als Brennkraftmaschine ausgebildetes Antriebsaggregat Quelle für Drehungleichförmigkeiten ist, ist es besonders vorteilhaft, vor allem im Zugbetrieb Maßnahmen bereitzustellen, die eine effiziente Dämpfung von Schwingungen im Antriebsstrang vermeiden. Um jedoch gleichermaßen im Zugbetrieb und auch im Schubbetrieb für eine derartige fluidische Dämpfungswirkung sorgen zu können, wird vorgeschlagen, dass die erste Dämpferfluidkammer wenigstens eine erste Druckkammer umfasst, deren Volumen bei Relativdrehung der Primärseite bezüglich der Sekundärseite in einer ersten Relativdrehrichtung verringerbar ist, und wenigstens eine zweite Druckkammer umfasst, deren Volumen bei Relativdrehung der Primärseite bezüglich der Sekundärseite in einer der ersten Relativdrehrichtungen entgegengesetzten zweiten Relativdrehrichtung verringerbar ist. Bei derartiger Ausgestaltung kann dann beispielsweise durch eine Umschaltventilanordnung vorgesehen sein, dass diejenige Druckkammer von erster Druckkammer und zweiter Druckkammer mit der Quelle für unter Druck stehendes erstes Dämpferfluid verbunden wird, deren Volumen bei Relativdrehung der Primärseite bezüglich der Sekundärseite verringert wird.

Eine aufgrund der effizienten Bauraumausnutzung besonders vorteilhafte Ausgestaltungsvariante kann vorsehen, dass die der wenigstens einen Druckkammer zugeordnete Verbindungskammer die wenigstens eine Druckkammer wenigstens bereichsweise radial außen umgebend angeordnet ist und dass die wenigstens eine Kammereinheit der zweiten Dämpferfluidkammeranordnung radial außerhalb der Verbindungskammer angeordnet ist.

Die zweite Dämpferfluidkammeranordnung kann eine Mehrzahl zweiter Kammereinheiten umfassen, wobei dann die Anordnung vorzugsweise derart ist, dass die zweiten Kammereinheiten in Umfangsrichtung aufeinander folgend angeordnet sind.

Das der wenigstens einen Kammereinheit zugeordnete Trennelement kann derart angeordnet sein, dass es im Wesentlichen radial verlagerbar ist, was im Wesentlichen bedeutet, dass die Kammereinheit ebenfalls entsprechend radial angeordnet ist.

Weiter kann der Aufbau der erfindungsgemäßen Torsionsschwingungsdämpferanordnung derart sein, dass eine Seite von Primärseite und Sekundärseite ein erstes im Wesentlichen zylindrisches Kammergehäuse umfasst und dass die andere Seite von Primärseite und Sekundärseite ein in das erste Kammergehäuse eingesetztes und mit diesem einen Ringraum begrenzendes zweites im Wesentlichen zylindrisches Kammergehäuse umfasst, wobei an dem ersten Kammergehäuse wenigstens ein auf das zweite Kammergehäuse zu sich erstreckender erster Umfangsbegrenzungsvorsprung vorgesehen ist und an dem zweiten Kammergehäuse wenigstens ein auf das erste Kammergehäuse zu sich erstreckender zweiter Umfangsbegrenzungsvorsprung vorgesehen ist, wobei zwischen jeweils einem ersten Umfangsbegrenzungsvorsprung und einem zweiten Umfangsbegrenzungsvorsprung eine Druckkammer in Umfangsrichtung begrenzt ist und das Volumen der Druckkammer durch Relativumfangsbewegung der diese begrenzende Umfangsbegrenzungsvorsprünge veränderbar ist.

Die vorliegende Erfindung wird nachfolgend mit Bezug auf die beiliegenden Figuren detailliert beschrieben. Es zeigt:
- Fig. 1: eine Teil-Längsschnittansicht eines Teils eines Antriebsstrangs zwischen einer Antriebswelle und einer Abtriebswelle;
- Fig. 2: eine Querschnittsansicht einer in Fig. 1 dargestellten Torsionsschwingungsdämpferanordnung;
- Fig. 3: eine Darstellung einer bei der Torsionsschwingungsdämpferanordnung eingesetzten Drosseleinheit;
- Fig. 4: eine prinzipartige Darstellung der Wirkungsweise der Torsionsschwingungsdämpferanordnung im Zugbetrieb;
- Fig. 5: aufgetragen über der Zeit, das Relativdrehverhalten zwischen Primärseite und Sekundärseite bei Belastung der Primärseite mit einem Drehmoment von 400 Nm, für den Fall, dass keine Drosseleinheit wirksam ist;
- Fig. 6: ein der Fig. 5 entsprechendes Diagramm für den Fall, dass eine Drosseleinheit wirksam ist;
- Fig. 7: ein Diagramm, welches aufgetragen über der Zeit, den Druck in einer Druckkammer und den Druck in einer Verbindungskammer bei zwischen diesen angeordneter Drosseleinheit veranschaulicht;
- Fig. 8: die Auslenkung eines Drosselelements einer Drosseleinheit, aufgetragen über der Zeit;
- Fig. 9: ein der Fig. 4 entsprechendes Diagramm bei einem System mit externer Druckfluidquelle;
- Fig. 10: aufgetragen über der Zeit, das Relativdrehverhalten zwischen der Primärseite und Sekundärseite bei dem in Fig. 9 gezeigten System, wenn an der Primärseite ein Drehmoment von 400 Nm vorliegt;
- Fig. 11: aufgetragen über der Zeit, den Druck in einer Druckkammer und in einer Verbindungskammer;
- Fig. 12: die Auslenkung eines Drosselelements einer Drosseleinheit, aufgetragen über der Zeit;
- Fig. 13: eine der Fig. 9 entsprechende Darstellung einer alternativen Ausgestaltungsart;
- Fig. 14: eine der Fig. 10 entsprechende Ansicht für das in Fig. 13 dargestellte Ausgestaltungsbeispiel;
- Fig. 15: eine der Fig. 11 entsprechende Ansicht für das in Fig. 13 dargestellte Ausgestaltungsbeispiel;
- Fig. 16: eine der Fig. 12 entsprechende Darstellung für das Ausgestaltungsbeispiel der Fig. 13.

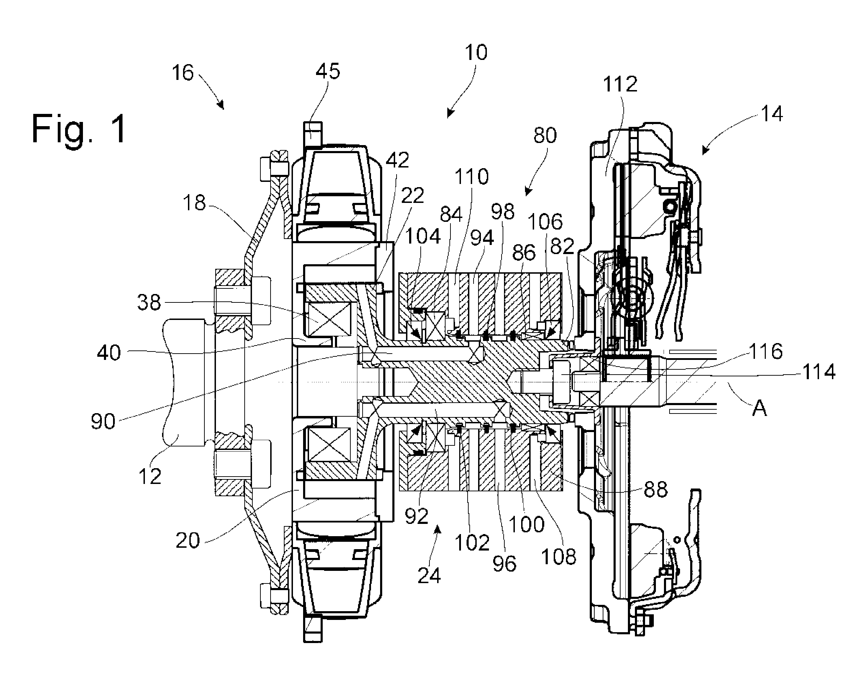

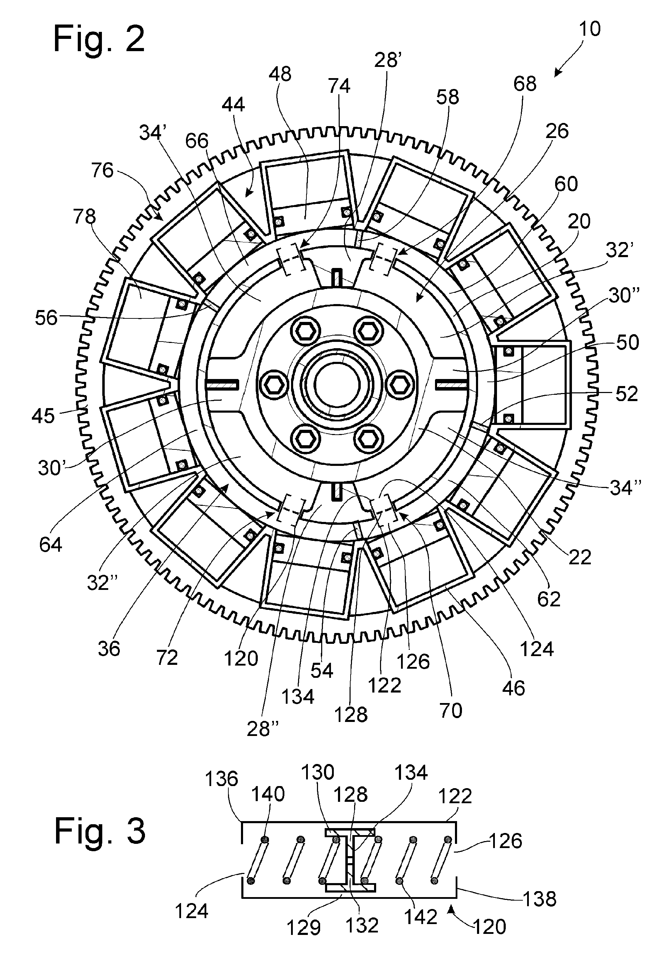

Die Fig. 1 und 2 zeigen eine erfindungsgemäße Torsionsschwingungsdämpferanordnung 10. Diese dient dazu, in dem Antriebsstrang eines Fahrzeugs ein Drehmoment zwischen einer um eine Drehachse A rotierenden Antriebswelle 12, also beispielsweise einer Kurbelwelle, und einer Reibungskupplung 14 zu übertragen. Mit Bezug auf nachfolgende Erläuterungen sei hier darauf hingewiesen, dass im Sinne der vorliegenden Erfindung von einem Zugzustand die Rede ist, wenn ein Drehmoment von der Antriebswelle 12 auf die Reibungskupplung 14 zu übertragen ist, während von einem Schubzustand dann die Rede ist, wenn das Drehmoment von der Reibungskupplung 14 in Richtung zur Antriebswelle 12 übertragen wird, also beispielsweise ein Fahrzeug in einem Motorbremszustand ist.

Die Torsionsschwingungsdämpferanordnung 10 umfasst eine allgemein mit 16 bezeichnete Primärseite. Diese ist über eine Flexplattenanordnung 18 mit der Antriebswelle 12 verbunden. Dies ist besonders daher von Vorteil, da dadurch eine Elastizität in den Antriebsstrang integriert ist, die Taumelbewegungen bzw. Achsversätze kompensieren kann. Außerdem kann, wie dies in Fig. 1 deutlich erkennbar ist, die Flexplattenanordnung 18 derart gestaltet sein, dass radial innen die Anbindung an die Antriebswelle 12 erfolgt und radial außen die Anbindung an die Primärseite 16 erfolgt, so dass im radial inneren Bereich der Torsionsschwingungsdämpferanordnung 10 keine Maßnahmen ergriffen werden müssen, um dort die Verbindung mit der Antriebswelle 12 zu ermöglichen.

Die Primärseite 16 umfasst ein im Wesentlichen ringartig ausgestaltetes erstes Kammergehäuse 20. In dieses ist in koaxialer Art und Weise ein ebenfalls ringartig ausgestaltetes zweites Kammergehäuse 22 einer Sekundärseite 24 der Torsionsschwingungsdämpferanordnung 10 eingesetzt. Wie in Fig. 2 deutlich sichtbar, ist zwischen den beiden Kammergehäusen 20, 22 ein ringartiger Zwischenraum 26 gebildet. Am ersten Kammergehäuse 20 sind in einem Winkelabstand von 180° zwei nach radial innen greifende Umfangsbegrenzungsvorsprünge 28' und 28" vorgesehen. Am zweiten Kammergehäuse 22 sind in entsprechender Weise ebenfalls in einem Winkelabstand von 180° zwei nach radial außen sich erstreckende Umfangsbegrenzungsvorsprünge 30' und 30" vorgesehen. Die auf das jeweils andere Kammergehäuse sich zu erstreckenden Umfangsbegrenzungsvorsprünge 28', 28", 30' und 30" begrenzen zwischen sich jeweilige erste Druckkammern 32' und 32" bzw. zweite Druckkammern 34' und 34" einer allgemein mit 36 bezeichneten ersten Dämpferfluidkammeranordnung. Durch an den jeweiligen Umfangsbegrenzungsvorsprüngen 28', 28", 30' und 30" vorgesehene Dichtungselemente sind die in Umfangsrichtung alternierend aufeinander folgenden Druckkammern 32', 34", 32", 34' im Wesentlichen fluiddicht voneinander getrennt. Die Druckkammern 32', 32", 34' und 34" sind ferner in axialer Richtung durch das erste Kammergehäuse 20 und eine mit diesem fest verbundene Abschlussplatte 42 in Verbindung mit dem zweiten Kammergehäuse 22 und daran jeweils vorgesehenen Dichtungselementen fluiddicht abgeschlossen. Durch die Relativdrehbarkeit der Primärseite 16 bezüglich der Sekundärseite 24 der Torsionsschwingungsdämpferanordnung 10 um die Drehachse A sind die Volumina der Druckkammern 32', 32", 34' und 34" veränderbar. Dreht sich beispielsweise in der Darstellung der Fig. 2 das innere Kammergehäuse 22 bezüglich des äußeren Kammergehäuses 20 im Gegenuhrzeigersinn, so nimmt das Volumen der zweiten Druckkammern 34' und 34" zu, während das Volumen der ersten Druckkammern 32' und 32" abnimmt.

Um diese Relativdrehbewegung in definierter Art und Weise zu ermöglichen, ist, wie in Fig. 2 erkennbar, ein Radiallager 38 vorgesehen, das zwischen dem Innenumfang des zweiten Kammergehäuses 22 und einem dieses radial innen übergreifenden Ansatz 40 des ersten Kammergehäuses 20 angeordnet ist. Dieses Lager 38 kann als Wälzkörperlager oder aber auch als Gleitlager ausgebildet sein. Weiter kann dieses Lager auch der Axialabstützung dienen.

Radial außen ist das erste Kammergehäuse 20 umgeben von einer Kammereinheitenbaugruppe 44. Diese beispielsweise in einem Teil gefertigte Kammereinheitenbaugruppe 44 umfasst eine Mehrzahl von in Umfangsrichtung um die Drehachse A aufeinander folgenden, topfartigen Kammereinheiten 46. Radial außen ist an der Kammereinheitenbaugruppe 44 als separates Bauteil ein mit den verschiedenen Kammereinheiten 46 in deren radialen äußerem Bereich beispielsweise durch Verschweißung fest verbundener Anlasserzahnkranz 45 vorgesehen. Die Kammereinheiten 46 sind also bezüglich der Drehachse A in nach radial außen sich erstreckender sternartiger Konfiguration angeordnet und sind nach radial innen offen.

In jede dieser Kammereinheiten 46 ist ein Trennkolben 48 eingesetzt, der durch ein O-ringartiges Dichtungselement bezüglich der jeweiligen Kammereinheit 46 fluiddicht abgeschlossen ist und in dieser im Wesentlichen in radialer Richtung verlagerbar ist. Nach radial innen sind die Kammereinheiten 46 zu einem Ringraum 50 offen. Dieser ist in Umfangsrichtung unterteilt durch mehrere Trennwände 52, 54, 56, 58. Durch diese Trennwände 52, 54, 56, 58 wird der Ringraum 50 unterteilt in vier Verbindungskammern 60, 62, 64, 66. Jede dieser Verbindungskammern 60, 62, 64, 66 ist einer der Druckkammern 32', 34", 32" bzw. 34' zugeordnet.

Man erkennt, dass im Kammergehäuse 20 radial außen jeweils Öffnungen 68, 70, 72, 74 vorhanden sind. Dabei stellt die Öffnung 68 eine Verbindung zwischen der ersten Druckkammer 32' und der radial außerhalb davon angeordneten Verbindungskammer 60 her. Die Öffnung 70 stellt eine Verbindung zwischen der zweiten Druckkammer 34" und der radial außerhalb davon angeordneten Verbindungskammer 62 her. Die Öffnung 72 stellt eine Verbindung zwischen der ersten Druckkammer 32" und der radial außerhalb davon angeordneten Verbindungskammer 64 her, und die Öffnung 74 stellt eine Verbindung zwischen der zweiten Druckkammer 34' und der radial außerhalb davon angeordneten Verbindungskammer 66 her.

Über diese Verbindungskammern 60, 62, 64, 66 sind die verschiedenen Druckkammern 32', 32" bzw. 34', 34" in Verbindung mit diesen jeweils zugeordneten der Kammereinheiten 46 einer allgemein mit 76 bezeichneten zweiten Dämpferfluidkammeranordnung. Man erkennt, dass durch die Positionierung der Trennwände 58 und 52 der ersten Druckkammer 32' über die Verbindungskammer 60 drei in Umfangsrichtung unmittelbar aufeinander folgende Kammereinheiten 46 zugeordnet sind. Der ersten Druckkammer 32" sind über die Verbindungskammer 64 vier der Kammereinheiten 46 zugeordnet. Der zweiten Druckkammer 34' sind über die Verbindungskammer 66 zwei Kammereinheiten 46 zugeordnet, und der zweiten Durckkammer 34" sind über die Verbindungskammer 62 ebenfalls zwei der Kammereinheiten 46 zugeordnet.

Die nach radial innen in Richtung zu dem Ringraum 50 bzw. den Verbindungskammern 60, 62, 64, 66 durch die Trennkolben 48 fluiddicht abgeschlossenen Volumina 78 der Kammereinheiten 46 sind mit einem kompressiblen Dämpferluid, also beispielsweise einem Gas, wie z.B. Luft, gefüllt. Die Druckkammern 32', 32", 34' und 34" sind, ebenso wie die Verbindungskammern 60, 62, 64, 66, mit einem im Wesentlichen inkompressiblen Dämpferfluid, also einer Flüssigkeit, wie z.B. Öl oder dergleichen, gefüllt.

Um die Druckkammern 32', 32", 34' und 34" bzw. die Verbindungskammern 60, 62, 64, 66 mit dem inkompressiblen Dämpferfluid zu füllen, ist der Sekundärseite 24 eine allgemein mit 80 bezeichnete Drehdurchführung zugeordnet. Diese umfasst ein einen axialen Fortsatz 82 des Kammergehäuses 22 umgebenden und durch zwei Lagereinheiten 84, 86 bezüglich diesem drehbar gehaltenen Drehdurchführungsring 88. Im Kammergehäuse 22 sind durch Bohrungen Kanäle 90 bzw. 92 gebildet, von welchen beispielsweise der Kanal 90 zu den zweiten Druckkammern 34' bzw. 34" führt, während der Kanal 92 zu den ersten Druckkammern 32', 32" führt. Um hier Strömungsverluste so gering als möglich zu halten, ist es selbstverständlich möglich, zu jeder der Druckkammern einen eigenen Kanal zu führen. In Zuordnung zu jedem dieser Kanäle ist in dem Drehdurchführungsring 80 dann ein im Rotationsbetrieb stationärer Kanal 94 bzw. 96 vorgesehen, über welche Kanäle 94, 96 die Kanäle 90, 92 in Verbindung mit einer Quelle für das inkompressible Dämpferfluid oder ein Reservoir dafür bringbar sind. Auf diese Art und Weise kann der Fluiddruck des inkompressiblen Dämpferfluids in den Druckkammern 32', 32", 34' und 34" entsprechend den erforderlichen Dämpfungscharakteristiken angepasst werden.

Man erkennt in Fig. 1 weiter, dass zwischen bzw. an beiden Seiten der Kanäle 94, 96 im Drehdurchführungsring 88 Dichtungselemente 98, 100 bzw. 102 vorhanden sind, welche im Wesentlichen Druckdichtungen darstellen. Axial jeweils außerhalb der Lager 84 und 86 sind weiterhin Volumenstromdichtungen 104, 106 angeordnet. Zwischen den Dichtungen 100 und 106 einerseits und 102, 104 andererseits gebildete Volumina können über jeweilige Leckagekanäle 108, 110 entleert werden, so dass möglicherweise durch die Druckdichtungen noch hindurch gelangtes inkompressibles Dämpferfluid ebenfalls in das Reservoir zurückgeleitet werden kann.

Zur Reibungskupplung 14 sei noch ausgeführt, dass diese von herkömmlichem Aufbau ist und im Bereich eines Schwungrads 112 radial innen mit einer Hirthverzahnung ausgebildet ist, die in Kämmeingriff mit einer Hirthverzahnung am axialen Fortsatz 82 des Kammergehäuses 22 steht. Durch eine Spannschraube 114 kann dieser Kämmeingriff stabil beibehalten werden, so dass eine drehfeste Verbindung der Reibungskupplung 14 mit der Sekundärseite 24 der Torsionsschwingungsdämpferanordnung 10 realisiert ist. Diese Spannschraube 114 belastet über eine Spannhülse 116 den radial inneren Bereich des Schwungrads 12. In dieser Spannhülse 116 kann über ein Pilotlager oder dergleichen dann eine Getriebeeingangswelle oder dergleichen radial gelagert sein.

Es sei hier darauf hingewiesen, dass dies nur ein Beispiel für einen Antriebsstrang ist. Selbstverständlich könnte auch eine Rotoranordnung einer Elektromaschine im Falle eines Hybridantriebs auf diese Art und Weise mit der Sekundärseite 24 der Torsionsschwingungsdämpferanordnung 10 gekoppelt werden. Auch andere zur Drehmomentübertragung dienende Baugruppen, wie z.B. ein hydrodynamischer Drehmomentwandler, eine Fluidkupplung oder dergleichen könnten auf diese Art und Weise an die Sekundärseite 24 der Torsionsschwingungsdämpferanordnung 10 angekoppelt werden.

Im Folgenden wird die Funktion der vorangehend mit Bezug auf die Fig. 1 und 2 hinsichtlich ihres konstruktiven Aufbaus beschriebenen Torsionsschwingungsdämpferanordnung 10 erläutert.

Im Zugzustand, also einem Zustand, in welchem ein Drehmoment von der Primärseite 12 auf die Sekundärseite 24 übertragen wird, wird also bei zunächst festgehaltener Sekundärseite 24 und in der Fig. 2 auch festgehaltenem Kammergehäuse 22 die Primärseite 12, in der Fig. 2 also das Kammergehäuse 20, im Gegenuhrzeigersinn verdreht. Dies bedeutet, dass das in den zweiten Druckkammern 34' und 34" enthaltene im Wesentlichen nicht kompressible Dämpferfluid aus diesen Druckkammern durch die Öffnungen 74 bzw. 70 hindurch in die zugeordneten Verbindungskammern 66, 62 verdrängt wird. Durch den in den Verbindungskammern 66, 62 ansteigenden Druck werden die Trennkolben 48 der diesen Verbindungskammern 60, 62 zugeordneten Kammereinheiten 46 der zweiten Dämpferfluidkammeranordnung 76 belastet, so dass sie unter Kompression und entsprechender Druckerhöhung des in den Volumina 78 vorhandenen kompressiblen Dämpferfluids nach radial außen bewegt werden. Mit zunehmender Kompression steigt auch die Gegenkraft, so dass hier tatsächlich eine Federcharakteristik erzielt wird. Tritt die Belastung in der anderen Richtung auf, werden die ersten Druckkammern 32' und 32" in ihrem Volumen verringert, so dass das darin enthaltene inkompressible Dämpferfluid durch die Öffnungen 68 bzw. 72 in die zugeordneten Verbindungskammern 60, 64 verdrängt wird und entsprechend die radial außerhalb dieser Verbindungskammern 60, 64 angeordneten Kammereinheiten 46 beaufschlagt werden. Die Trennkolben 48 dieser Kammereinheiten 46 werden sich unter Kompression des kompressiblen Dämpferfluids nach radial außen bewegen und nunmehr in der Schubrichtung für die gewünschte Dämpfungscharakteristik sorgen.

Da bei dem in der Fig. 2 gezeigten Ausgestaltungsbeispiel die Trennkolben 48 in der Neutral-Relativdrehlage zwischen Primärseite 16 und Sekundärseite 24 in ihrer maximal nach radial innen verlagerten Positionierung sind, ist es erforderlich, diejenigen Druckkammern 32', 32", 34', 34", deren Volumen bei Relativdrehung zwischen Primärseite 16 und Sekundärseite 24 zunimmt, in diesem Zustand mit einem Reservoir für druckloses erstes Dämpferfluid zu verbinden, um bei dieser Relativdrehung und auch bei der Rückdrehung in die Neutral-Relativdrehlage eine entsprechende Volumenänderung dieser Druckkammern zuzulassen. Befinden sich jedoch die Trennkolben 48 im Zustand der Neutral-Relativdrehlage beispielsweise radial mittig in den diese jeweils aufnehmenden Kammereinheiten 46, können sie sich bei Druckabnahme, also Volumenvergrößerung einer jeweils zugeordneten Druckkammer, nach radial innen verlagern, und zwar unter der Vorspannwirkung des in einer jeweiligen Kammereinheit 46 vorhandenen zweiten Dämpferfluids, um somit das für eine Volumenvergrößerung erforderliche erste Dämpferfluid aus einer Verbindungskammer in eine jeweilige Druckkammer zu liefern. Bei derartiger Ausgestaltung könnte eine derartige Torsionsschwingungsdämpferanordnung 10 als autarkes, nach außen hin abgeschlossenes, also nicht mit erstem Dämpfungsfluid versorgtes System arbeiten. Die Verbindung mit einer Druckfluidquelle über die Drehdurchführung 88 ist jedoch daher vorteilhaft, da auf diese Art und Weise durch entsprechende Variation bzw. Beeinflussung des Fluiddrucks in jeweiligen Druckkammern 32', 34', 32", 34" ein Einfluss auf das Schwingungsdämpfungsverhalten genommen werden kann.

Aus der vorangehenden Beschreibung erkennt man, dass durch die Verdrängung des inkompressiblen Dämpferfluids in der ersten Dämpferfluidkammeranordnung 36 und die entsprechende Beaufschlagung der Trennkolben 48 in den Kammereinheiten 46 der zweiten Dämpferfluidkammeranordnung 76 sowohl in Schubrichtung, als auch in Zugrichtung eine Dämpfungsfunktionalität erhalten werden kann. Die Dämpfungscharakteristik wird sich in Zugrichtung und in Schubrichtung unterscheiden, da in Zugrichtung insgesamt vier Kammereinheiten 46 wirksam sind, während dies in Schubrichtung insgesamt sieben Kammereinheiten 46 sind. Man erkennt also, dass allein durch die Positionierung der Trennwände 52, 54, 56, 58 eine Auswahl dahingehend getroffen werden kann, wie viele der Kammereinheiten 46 der zweiten Dämpferfluidkammeranordnung 76 im Schubbetrieb bzw. im Zugbetrieb wirksam sind. Weiterhin kann ein Einfluss auf die Dämpfungscharakteristik dadurch genommen werden, dass den verschiedenen ersten und ggf. auch den verschiedenen zweiten Druckkammern 32', 32" bzw. 34', 34" ebenfalls verschiedene Anzahlen an Kammereinheiten 46 zugeordnet sind, wie dies bei den ersten Druckkammern 32', 32" erkennbar ist. Um dabei im Rotationsbetrieb das Auftreten von Unwuchten zu vermeiden, ist es vorteilhaft, eine möglichst gleichmäßige Verteilung um die Drehachse A zu erhalten. Auch kann selbstverständlich die Größe bzw. die Anzahl der Kammereinheiten 46 auf die gegebenen Anforderungen abgestimmt sein. Bei dem dargestellten Beispiel mit insgesamt 11 Kammereinheiten 46 ist auf Grund der auch vorhandenen Trennung der einzelnen Kammereinheiten 46 voneinander zwangsweise eine ungleichmäßige Wirkcharakteristik in Zugrichtung und in Schubrichtung vorgesehen. Bei gerader Anzahl der Kammereinheiten 46 können in Zug- und in Schubrichtung gleich viele davon wirksam sein und mithin eine gleichmäßige Wirkcharakteristik in beiden Belastungsrichtungen bereitgestellt werden.

Man erkennt in Fig. 2, dass in den Öffnungen 68, 70, 72, 74 zwischen einer jeweiligen Druckkammer 32', 34", 32", 34' und der jeweils zugeordneten Verbindungskammer 60, 62, 64, 66 eine Drosseleinheit 120 angeordnet ist. Diese Drosseleinheiten 120 können zueinander baugleich sein. Die Fig. 3 zeigt eine derartige Drosseleinheit 120 in detaillierterer Art und Weise. Diese umfasst einen beispielsweise zylindrisch, also als Hohlkörper ausgebildeten Drosselkörper 122, der an seinen beiden Längsenden jeweils mit einer ersten Drosselöffnung 124 bzw. 126 ausgebildet ist. In dem Drosselkörper 122 ist ein blendenartig ausgebildetes Drosselelement 128 angeordnet, das einen beispielsweise zylindrischen Umfangsbereich 130 und in einer Bewegungsrichtung zentral darin einen Blendenbereich 132 umfasst. In dem Blendenbereich 132 des Drosselelements 128 ist eine zweite Drosselöffnung 134 vorgesehen, die einen geringeren Öffnungsquerschnitt aufweist, als die beiden ersten Drosselöffnungen 124, 126. Durch zwei sich an Stirnwandungen 136, 138, in welchen auch die ersten Drosselöffnungen 124, 126 vorgesehen sind, abstützende Federn 140, 142, beispielsweise Schraubendruckfedern, ist das Drosselelement 128 mittig zwischen den Stirnwandungen 136, 138 gehalten und in diese Positionierung vorgespannt.

Man erkennt weiter, dass der Umfangsbereich 30 bzw. das Drosselelement 128 so dimensioniert sind, dass sie einen Zwischenraum 129 zum Drosselkörper 122 belassen, der vorzugsweise möglichst klein ist. Im Idealfalle könnte das Drosselelement 128 in dem Drosselkörper 122 als kolbenartig darin verschiebbares Element ausgebildet sein, bei dem der Zwischenraum 129 praktisch vollständig geschlossen ist bzw. sogar durch ein Dichtungselement abgeschlossen ist.

Befindet sich das Drosselelement 128 in der in Fig. 3 gezeigten im Wesentlichen zentralen Positionierung zwischen den beiden ersten Drosselöffnungen 124, 126, haben Volumenänderungen einer zugeordneten Druckkammer zur Folge, dass das Drosselelement 128 zusammen mit dem im Drosselkörper 122 vorhandenen Fluid verschoben wird, und zwar gegen die Vorspannwirkung der Federn 140 bzw. 142. Bewegt sich das Drosselelement 128 entgegen der Vorspannung einer der Federn 140, 142 in Richtung auf eine der Stirnwandungen 136, 138 zu und kommt es dabei mit dem Umfangsbereich 130 in Anlage an beispielsweise der Stirnwandung 136, so ist die erste Drosselöffnung 124 von dem Drosselelement 128 überdeckt. Die Feder 140 ist in dem zwischen der Stirnwandung 136 und dem Blendenbereich 132 gebildeten Zwischenraum komprimiert aufgenommen und der dann noch zur Verfügung stehende Strömungsquerschnitt ist im Wesentlichen bestimmt durch die Größe der zweiten Drosselöffnung 134. Dies gilt selbstverständlich auch für die Zusammenwirkung des Drosselelements 128 mit der anderen ersten Drosselöffnung 126.

Wird also beispielsweise aus einer Druckkammer aufgrund einer nur vergleichsweise geringen Relativdrehung zwischen der Primärseite und der Sekundärseite auch nur ein entsprechend geringes Volumen des ersten Dämpferfluids verdrängt, so verschiebt sich mit diesem verdrängten Volumen des ersten Dämpferfluids, welches im Wesentlichen auch in den Drosselkörper 122 hinein verdrängt wird, das Drosselelement 128 durch den zunächst druckkammerseitig ansteigenden Druck und verdrängt dabei seinerseits im Drosselkörper 122 vorhandenes erstes Dämpferfluid über die erste Drosselöffnung 126 in Richtung zu einer zugeordneten Verbindungskammer, so dass ein entsprechendes Volumen des zweiten Dämpferfluids belastet wird und dadurch eine fluidische Dämpfungswirkung stattfinden kann. Bei Drehmomentschwankungen und entsprechend Drehschwingungen in einem vergleichsweise kleinen Winkelbereich, wie sie im normalen Fahrzustand auftreten, wird aufgrund einer vergleichsweise weichen Einspannung des Drosselelements 128 zwischen den Federn 140, 142 dieses im Wesentlichen der Oszillationsbewegung des ersten Dämpferfluids folgen, so dass eine faktisch ohne Wirksamkeit einer jeweiligen Drosseleinheit 120 erzielbare fluidische Dämpfungswirkung einsetzt. Erst dann, wenn bei größeren Relativauslenkungen zwischen Primärseite und Sekundärseite eine größere Menge des ersten Dämpferfluids aus einer jeweiligen Druckkammer verdrängt wird, verlagert sich das Drosselelement 128 derart stark, dass es die zugeordnete erste Drosselöffnung 126 überdeckt und mithin erstes Dämpferfluid in Richtung Verbindungskammer nur noch durch die zweite Drosselöffnung 134 strömen kann. Dabei kann, wie vorangehend bereits dargelegt, der Umfangsbereich 130 an einer der Stirnwandung 138 anstoßen. Grundsätzlich ist es auch möglich, dass die jeweils komprimierte Feder 140 oder 142 auf Block gesetzt wird und damit den zwischen einer ersten Drosselöffnung und der zweiten Drosselöffnung 134 eingeschlossenen Volumenbereich abschließt, so dass tatsächlich die jeweils involvierte erste Drosselöffnung 124 oder 126 gleichermaßen durch das Drosselelement 128 überdeckt ist. Entsprechendes gilt selbstverständlich auch für den Fall, dass das Volumen einer jeweiligen Druckkammer zunimmt, wobei dann die andere der ersten Drosselöffnungen überdeckt wird, wenn die Relativauslenkung und mithin das Volumen der involvierten Druckkammer sich über ein bestimmtes Ausmaß hinausgehend verändert.

Befindet sich das Antriebssystem in einem stationären Zustand, beispielsweise mit Übertragung eines vergleichsweise großen Drehmoments, was zu einer entsprechenden permanenten Relativauslenkung zwischen Primärseite und Sekundärseite führt, so wird zunächst das Drosselelement 128 am Beginn dieses Zustands aus seiner zentralen Lage in Fig. 3 ausgelenkt werden und dabei möglicherweise eine der ersten Drosselöffnungen überdecken. Nachdem jedoch über die zweite Drosselöffnung 134 im Drosselelement 128 allmählich ein Druckausgleich zwischen der involvierten Druckkammer und der zugeordneten Verbindungskammer stattgefunden hat, bewegt sich das Drosselelement 128 wieder in Richtung zu der in Fig. 3 erkennbaren zentralen Positionierung, so dass auch in diesem belasteten Zustand dann auftretende Drehschwingungen in der gleichen Art und Weise bedämpft werden können, wie vorangehend beschrieben.

Man erkennt aus der vorangehenden Erläuterung, dass eine erfindungsgemäß aufgebaute Drosseleinheit 122 primär in Abhängigkeit von der Volumenänderung einer Druckkammer arbeitet, welche wiederum einhergeht mit einer Relativdrehung zwischen Primärseite und Sekundärseite. Relativdrehungen in einem kleinen Auslenkungsbereich führen zunächst noch nicht zu einer Änderung der Drosselwirkung. Erst dann, wenn innerhalb vergleichsweise kurzer Zeit eine größere Relativauslenkung stattfindet, wird das Drosselelement wirksam. Vergleichsweise langsam vonstatten gehende Volumenänderungen können auch dann, wenn sie beispielsweise über die zweite Drosselöffnung 138 ausgeglichen werden können, dazu führen, dass gleichwohl das Drosselelement 128 nicht verstärkt drosselnd wirkt bzw. sich nicht soweit verschiebt, dass es eine weitergehende Verschiebung der Säule des ersten Dämpferfluids im Drosselkörper 122 nicht mehr zulässt und somit eine Verdrängung nur noch über die zweite Drosselöffnung 134 möglich ist.

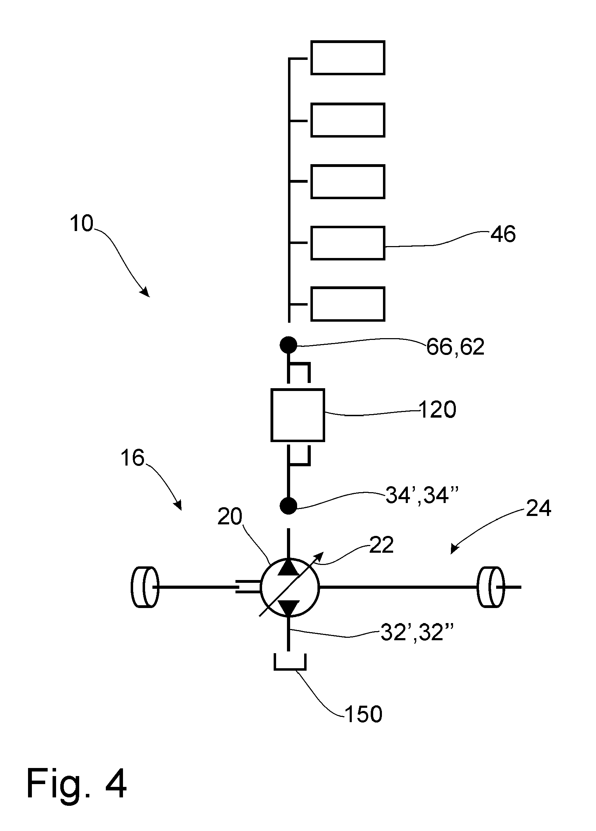

Die Funktionalität der Drosseleinheiten 120 wird nachfolgend auch unter Bezug auf die Fig. 4 bis 8 erläutert. Dabei zeigt die Fig. 4 in prinzipartiger Darstellung die Torsionsschwingungsdämpferanordnung 10, wobei hier insbesondere eine Betrachtung des Zugzustands gezeigt ist, in welchem die nur symbolisch angedeuteten Druckkammern 34', 34" auf Druck belastet werden und das darin enthaltene erste Dämpferfluid über die zugeordneten Drosseleinheiten 120 in die ebenfalls zugeordneten Verbindungskammern 66, 62 verdrängt wird und dabei die Trennelemente 48 der zugeordneten Kammereinheiten 46 belastet bzw. verschiebt. Die Druckkammern 32', 32" sind dann beispielsweise in Verbindung mit einem in Fig. 4 dargestellten Reservoir 150 für im Wesentlichen druckloses erstes Dämpferfluid und können dieses ansaugen.

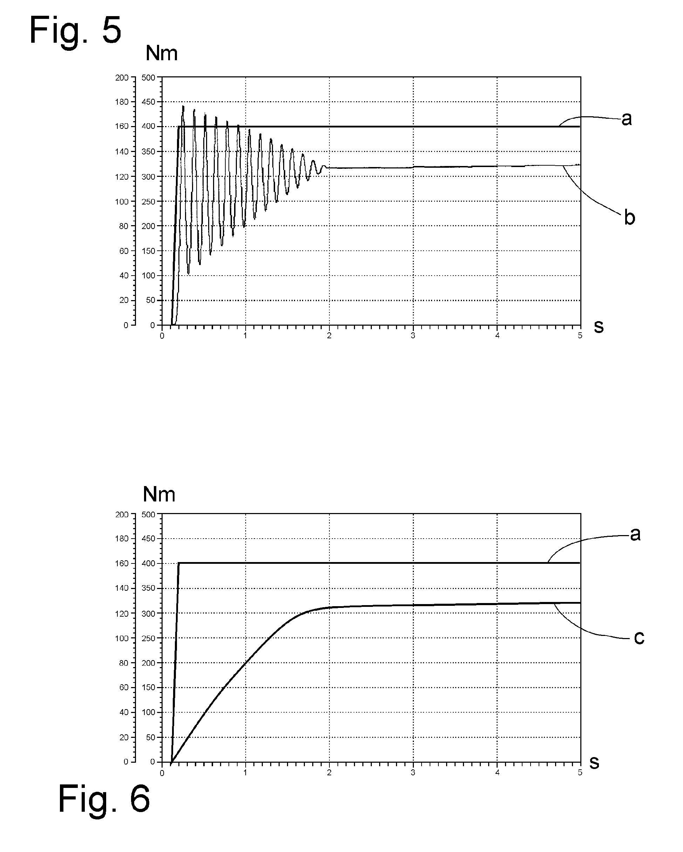

Die Fig. 5 stellt den Zustand dar, in welchem bei festgehaltener Sekundärseite 24 an der Primärseite 16 spontan ein Drehmoment von 400 Nm angelegt wird. Dieses Drehmoment ist in Fig. 5 repräsentiert durch die Drehmomentenkurve a. Die Kurve b zeigt den sich dann einstellenden Relativdrehwinkel zwischen Primärseite und Sekundärseite, und zwar für den Fall, dass in den Verbindungsöffnungen zwischen den Druckkammern und den Verbindungskammern keine Drosseleinheiten angeordnet sind. Man erkennt anhand dieser als Simulationsrechnung erstellten Darstellung, dass bei dem spontanen Anstieg des Drehmoments die Primärseite und die Sekundärseite sich auch spontan bezüglich einander verdrehen und es zu einem deutlichen Schwingungsverhalten mit großen Drehwinkelauslenkungen kommt. Dies wird möglich, da im Strömungsweg zwischen den Druckkammern und den Verbindungskammern nur eine geringe Drosselwirkung vorhanden ist und somit der Relativdrehung zwischen der Primärseite und der Sekundärseite nur ein anhand einer grundsätzlich an sich gewünschten weichen Dämpfungscharakteristik sich einstellender geringer Widerstand entgegengesetzt ist. Da bei Torsionsschwingungsdämpferanordnungen, wie sie beispielsweise in den Fig. 1 und 2 gezeigt sind, grundsätzlich eine Verdrehung zwischen Primärseite und Sekundärseite in einem Winkelbereich von weniger als 90° maximal erreichbar ist, würde ein derartig starker Drehmomentenanstieg bedeuten, dass die Primärseite 16 und die Sekundärseite 24 gegeneinander schlagen.

Dies kann verhindert werden, indem die in den Fig. 2 und 3 gezeigten Drosseleinheiten 120 eingesetzt werden. Das Diagramm der Fig. 6 zeigt anhand einer Kurve c den Anstieg des Relativdrehwinkels bei spontan angelegtem Drehmoment von 400 Nm. Man erkennt, dass der sich bei diesem Drehmoment einstellende maximale Relativdrehwinkel von etwa 130° ohne das in der Fig. 5 erkennbare massive Überschwingungsverhalten in einem asymptotischen Verlauf erreicht wird. Auch hier sei angemerkt, dass das Diagramm der Fig. 6 anhand einer Simulationsrechnung ermittelt wurde, bei welcher keine konstruktiven Beschränkungen für den Relativdrehwinkel gesetzt sind. Deutlich ist jedoch, dass durch die vermittels der Drosseleinheiten 120 erzielbare Drosselwirkung und den damit sich einstellenden asymptotischen Verlauf der Relativauslenkung zwischen Primärseite 16 und Sekundärseite 24 eine deutliche Verzögerung in dieser Relativdrehbewegung erzielt werden kann, mit welcher das gegenseitige Anschlagen von Primärseite 16 und Sekundärseite 24 verhindert bzw. deutlich abgedämpft werden kann.

Erreicht wird dieser Effekt dadurch, dass bedingt durch die sich spontan einstellende Auslenkungsbewegung bei Anlegen eines großen Drehmoments zwischen einer Druckkammer und einer zugehörigen Verbindungskammer eine starke Relativdrehung erzeugt wird, die dazu führt, dass das Drosselelement 128 einer Drosseleinheit 120 entgegen der auf dieses einwirkenden Vorspannkraft in Richtung zu der verbindungskammerseitig liegenden Stirnwandung der beiden Stirnwandungen 136, 138 verlagert wird. Dabei überdeckt das Drosselelement 128 dann die in dieser Stirnwandung 136 oder 138 vorgesehene erste Drosselöffnung 124 oder 126, so dass eine Durchströmung nur noch durch die zweite Drosselöffnung 134 möglich ist. Dem aus der betrachteten Druckkammer verdrängten ersten Dämpferfluid ist dann also ein deutlich größerer Strömungswiderstand entgegengesetzt, so dass entsprechend der geringeren Abströmrate auch die Relativdrehbewegung zwischen Primärseite 16 und Sekundärseite 24 abgebremst wird. Solange jedoch die Torsionsschwingungsdämpferanordnung 10 in einem normalen Drehmomentenbereich arbeitet, in welchem derartige spontane Drehmomentenüberhöhungen nicht auftreten, verbleibt das Drosselelement 128 näherungsweise in dem Bereich der zentralen Positionierung zwischen den beiden Stirnwandungen 136, 138, überdeckt in jedem Falle die beiden ersten Drosselöffnungen 124, 126 nicht, so dass aufgrund der dann vorhandenen geringeren Drosselwirkung eine weichere Kennung der Torsionsschwingungsdämpferanordnung 10 und mithin eine bessere Entkopplungsqualität zwischen Primärseite 16 und Sekundärseite 24 erreichbar ist.

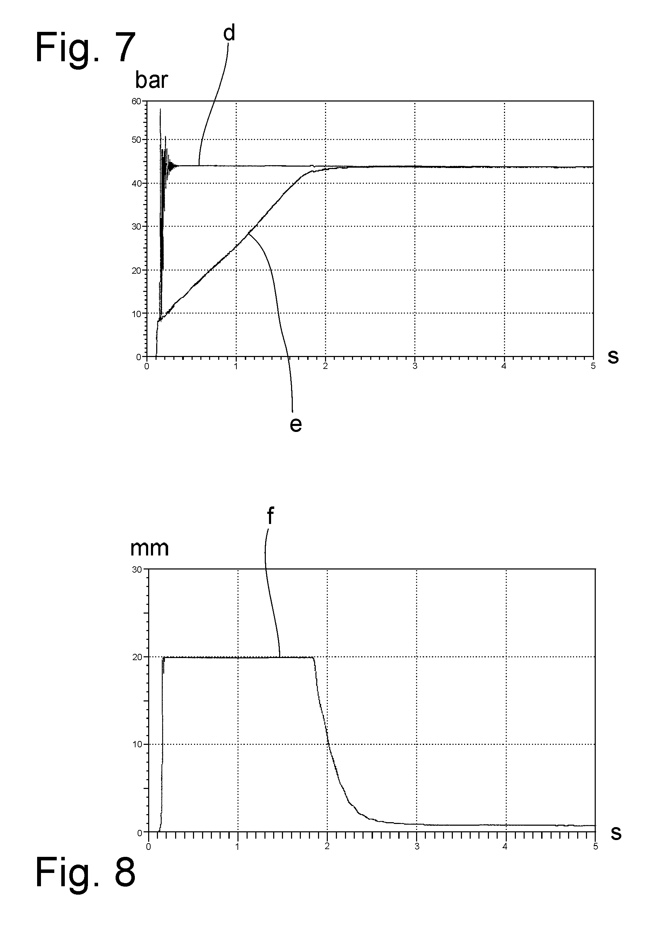

Die Fig. 7 zeigt in Zuordnung zum Diagramm der Fig. 6 das Druckverhalten in einer im Zugbetrieb, also bei Drehmomentenbelastung der Primärseite belasteten Druckkammer anhand einer Kurve d und einer zugeordneten Verbindungskammer anhand einer Kurve e. Man erkennt, dass in der Druckkammer entsprechend dem spontanen Drehmomentanstieg (siehe Kurve a) der Druck entsprechend schnell ansteigt und dann auf näherungsweise gleichem Niveau bleibt. Der Druck der zugeordneten Verbindungskammer steigt kurzzeitig auch spontan an, und zwar so lange, so lange das betrachtete Drosselelement 128 sich mit dem ersten Dämpferfluid verschiebt und die erste Drosselöffnung 124 noch nicht überdeckt. Ist dieser Zustand erreicht, steigt der Druck, wie die Kurve e dies deutlich zeigt, mit näherungsweise konstanter Rate in der zugeordneten Verbindungskammer allmählich an, bis er nach etwa 2 Sekunden das gleiche Niveau erreicht, wie der Druck in der Druckkammer.

Die Fig. 8 zeigt in Zuordnung zu dieser Belastung die Auslenkung des Drosselelements 128 anhand einer Kurve f. Man erkennt, dass mit dem Anstieg des Drucks bzw. der Druckdifferenz das Drosselelement 128 spontan in den maximal möglichen Auslenkungszustand gebracht wird, der hier bei 20 mm liegt. Nähert sich der Druck in der Verbindungskammer dem Druck in der Druckkammer an, bewegt sich das Drosselelement 128 allmählich bedingt durch die auf dieses einwirkende Vorspannkraft wieder in seine zentrale Positionierung zurück und gibt dabei die zunächst noch überdeckte erste Drosselöffnung wieder frei.

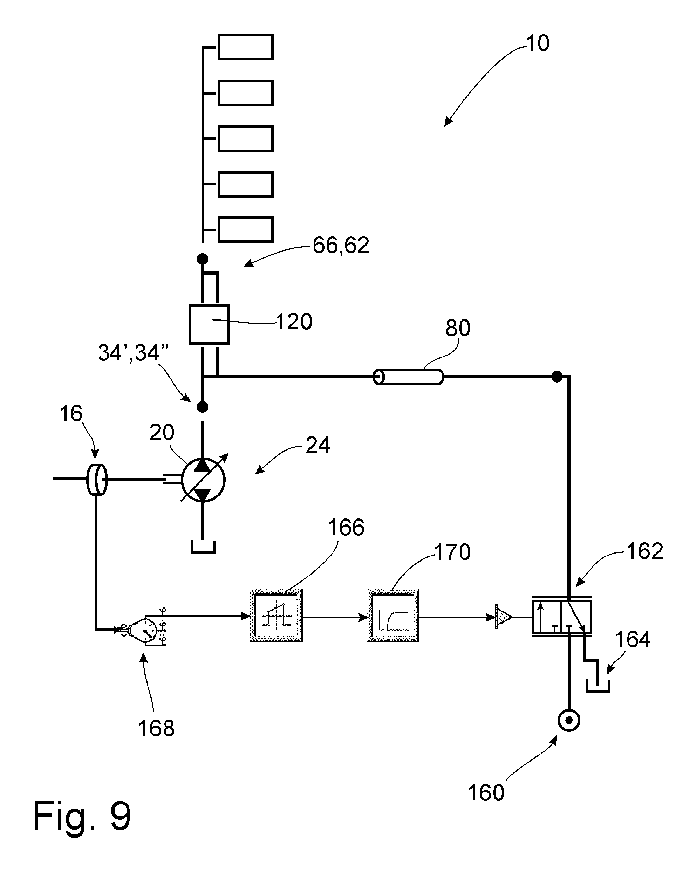

In Fig. 9 ist anhand eines der Darstellung der Fig. 4 entsprechenden Prinzipdiagramms eine Torsionsschwingungsdämpferanordnung 10 dargestellt, bei welcher nicht nur Drosseleinheiten 120 zwischen belasteten Druckkammern und den zugeordneten Verbindungskammern wirken, sondern zusätzlich auch noch über die Drehdurchführung 80 die Verdrängungskammern, hier wieder die zugseitigen Verdrängungskammern 34', 34", in Verbindung mit einer Quelle 160 für unter Druck stehendes erstes Dämpferfluid bringbar sind. Hier ist eine Ventilanordnung 162 vorgesehen, welche die jeweils belasteten Druckkammern wahlweise mit der Quelle 160 oder einem Reservoir 164 verbindet. Ein Kasten 166 symbolisiert einen Regler, welcher, beispielsweise unter Berücksichtigung eines vermittels eines Relativdrehwinkelsensors 168 erfassten Relativdrehwinkels Ansteuersignale für die Ventilanordnung 162 generiert, welche bedingt durch die vorhandenen Trägheiten eine durch den Kasten 170 symbolisierte Verzögerung in ihrem Ansprechverhalten aufweist. Abhängig von dem durch die Relativdrehwinkelsensoranordnung 168 erfassten Relativdrehwinkel zwischen der Primärseite 16 und der Sekundärseite 24 kann über die Ventilanordnung 162 das Ausmaß, in welchem die Druckfluidquelle 160 mit den belasteten Druckkammern 34', 34" verbunden wird, eingestellt werden, um der zunehmenden Relativauslenkung entgegenzuwirken und beispielsweise die Primärseite 16 und die Sekundärseite 24 auch bei anliegendem Drehmoment wieder in Richtung zur Neutral-Relativdrehlage zurück zu bewegen.

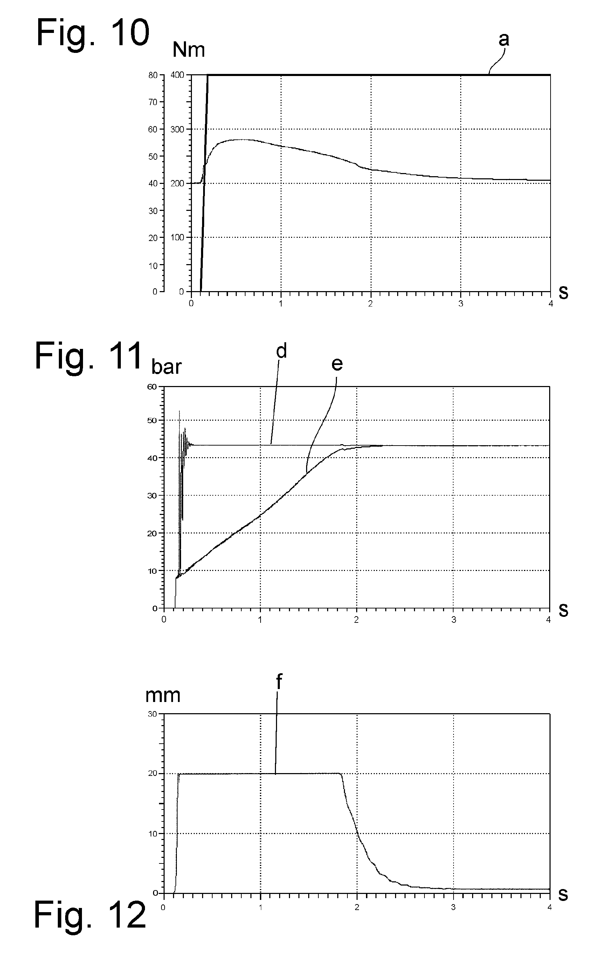

In Fig. 10 ist wieder über der Zeit aufgetragen das bei festgehaltener Sekundärseite 24 an die Primärseite 16 angelegte Drehmoment, welches wieder spontan auf einen Wert von 400 Nm ansteigt. Auch der Relativdrehwinkel zwischen Primärseite 16 und Sekundärseite 24 nimmt hier wieder zu, wobei hier als Ausgangsbasis, also Neutral-Relativdrehlage, ein Winkel von 20° angenommen wird. Aufgrund der Drosselwirkung der Drosseleinheiten 120 steigt jedoch die Auslenkung nur allmählich an. Es ist ausreichend Zeit, um durch Ansteuerung der Ventilanordnung 162 die Quelle 160 an die auf Druck belasteten Druckkammern 34', 34" anzukoppeln und durch Erhöhung des Drucks des ersten Dämpferfluids ein Gegendrehmoment aufzubauen, durch welches bei weiterhin anliegendem Drehmoment an der Primärseite 16 diese allmählich bezüglich der Sekundärseite 24 wieder in die Neutral-Relativdrehlage zurückbewegt wird.

Man erkennt anhand der Fig. 11 wieder den allmählichen Anstieg des Drucks in einer Verbindungskammer (Kurve e), im Vergleich zu dem spontanen Druckanstieg in einer Druckkammer. Das Diagramm der Fig. 12 veranschaulicht wieder die Auslenkung des betrachteten Drosselelements 128, welches sich dann, wenn die Drücke in einer Druckkammer oder einer Verbindungskammer sich wieder einander angenähert haben, in seine die erste Drosselöffnung 124 nicht mehr überdeckende Positionierung zurückkehrt.

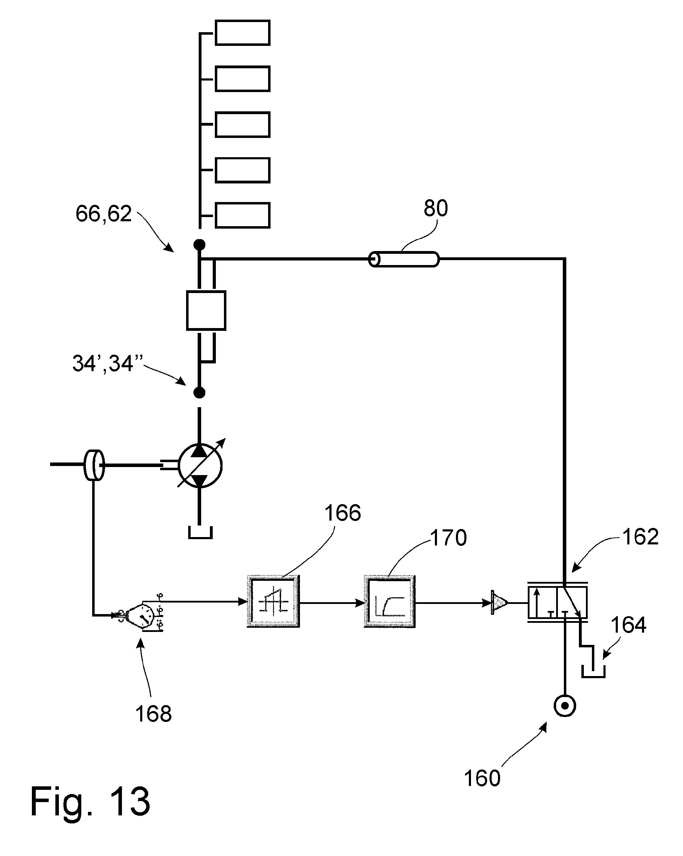

Die Fig. 13 zeigt eine Abwandlung des in Fig. 9 dargestellten Systems. Während bei der Ausgestaltungsvariante der Fig. 9 die Druckfluidquelle 160 unmittelbar in Verbindung gebracht wird mit den jeweils auf verstärkten Druck belasteten Druckkammern, erfolgt diese Ankopplung in der in Fig. 13 gezeigten Ausgestaltungsvariante über die jeweils zugeordneten Verbindungskammern 66, 62. Das heißt, bei hergestellter Verbindung mit der Druckfluidquelle 160 steigt zunächst der Druck in den Verbindungskammern 66, 62 an, und es findet dann ein Druckausgleich durch die Drosseleinheiten 120 hindurch in Richtung zu den jeweils entsprechend belasteten Druckkammern 34', 34" statt.

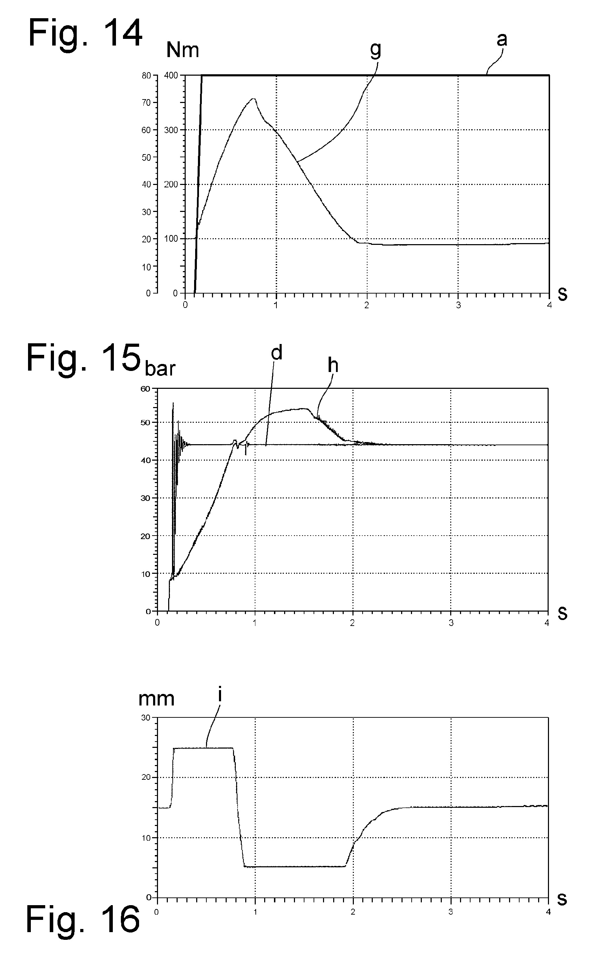

Die Fig. 14 zeigt den Verlauf der Relativauslenkung zwischen Primärseite 16 und Sekundärseite 24, der im Vergleich zu dem in Fig. 10 gezeigten Verlauf zunächst einen stärkeren Anstieg zeigt. Grund hierfür ist, dass zwar die Drosseleinheiten 120 wirksam sind, also das Abströmen von erstem Dämpferfluid aus den Druckkammern 34', 34" verzögern, dass jedoch zunächst kein verstärkter Druckaufbau in den Druckkammern 34, 34" stattfindet.

Man erkennt jedoch am Verlauf der Kurve h in Fig. 15, welche die Entwicklung des Drucks in einer Verbindungskammer symbolisiert, dass dort der Druck deutlich stärker ansteigt, und zwar bedingt dadurch, dass zusätzlich zu der Einleitung von erstem Dämpferfluid über eine zweite Drosselöffnung 134 auch eine Verbindung mit der Druckfluidquelle 160 realisiert ist. Der Druck in der Verbindungskammer übersteigt daher den Druck in der zugeordneten Druckkammer deutlich mit der Folge, dass, wie dies die Kurve i in Fig. 16 zeigt, aufgrund der Umkehr der Druckverhältnisse das Drosselelement 128 sich von der Anlage an der Stirnwandung 136 in Anlage an die andere Stirnwandung 138 bewegt. Es strömt dann durch die zweite Drosselöffnung 134 hindurch erstes Druckfluid aus der Verbindungskammer in die zugeordnete Druckkammer, so dass allmählich wieder der in Fig. 15 erkennbare Druckausgleich stattfindet. Gleichen sich die beiden Drücke wieder an, kehrt das Drosselelement 134 wieder in seine zentrale Positionierung zurück.

Die vorangehenden, anhand von Simulationen dargelegten Beispiele des Einflusses der Drosseleinheiten 120 auf die bei Drehmomentenanstieg sich einstellenden Relativauslenkungen zwischen der Primärseite 16 und der Sekundärseite 24 zeigen, dass durch das Vorsehen derartiger Drosseleinheiten 120 und den damit eingeführten Bremseffekt einer übermäßig starken bzw. schnellen Verdrehung zwischen Primärseite 16 und Sekundärseite 24 effektiv entgegengewirkt werden kann. Das Ausmaß, in welchen dieser Verdrehung entgegengewirkt wird, ist primär bestimmbar durch die Stärke des durch das Drosselelement 128 generierten Drosseleffekts. Je stärker die Abbremsung erfolgen soll, desto kleiner kann im Verhältnis zum weniger gedrosselten Zustand der Querschnitt der zweiten Drosselöffnung 134 gewählt werden. Auch ist es beispielsweise möglich, dann, wenn zwei Druckkammern 32', 32" oder 34', 34" parallel wirken, in Zuordnung zu nur einer dieser Druckkammern eine Drosseleinheit 120 vorzusehen und die andere im Wesentlichen ungedrosselt arbeiten zu lassen, oder zwei Drosseleinheiten mit unterschiedlicher Drosselcharakteristik vorzusehen. Ferner kann das Ausmaß, in welchem eine Relativdrehung zwischen der Primärseite und der Sekundärseite ohne das Wirksamwerden einer oder mehrerer Drosseleinheiten zugelassen ist, durch den Verschiebeweg des jeweiligen Drosselelements in dem zugeordneten Drosselkörper bestimmt werden. Je größer der zugelassene Verschiebeweg, desto mehr erstes Dämpferfluid kann aus einer Druckkammer verdrängt werden bzw. darin aufgenommen werden, ohne das zugeordnete Drosselelement so weit zu verschieben, dass es verstärkt drosselnd wirksam wird. Selbstverständlich ist es auch möglich, in den beiden unterschiedlichen Richtungen der Volumenänderung unterschiedliche Wirkcharakteristiken, also unterschiedlich große Verdrängungswege, bereitzustellen. Weiter sei darauf hingewiesen, dass, obgleich vorangehend mit Bezug auf die verschiedenen Systeme jeweils nur Beispiele dargelegt wurden, die zeigen, wie das System bei Drehmomentenanstieg an der Primärseite bei zunächst festgehaltener Sekundärseite arbeitet, selbstverständlich auch für die Drehmomenteneinleitung über die Sekundärseite, also den Schubzustand, die gleichen Maßnahmen getroffen sein können. In diesem Falle kann dann jeweils auch ein Umschalten dahingehend stattfinden, dass die auf Druck, d. h. Volumenverringerung belasteten Druckkammern in Verbindung mit der Druckfluidquelle 160 gebracht werden, während diejenigen Druckkammern, die im jeweiligen Relativdrehzustand ihr Volumen vergrößern, in Verbindung mit einem Reservoir für erstes Dämpferfluid gebracht werden.

## Patentansprüche

1. Torsionsschwingungsdämpferanordnung, insbesondere für den Antriebsstrang eines Fahrzeugs, umfassend eine Primärseite (16) und eine über eine Dämpferfluidanordnung mit der Primärseite (16) zur Drehung um eine Drehachse (A) und zur Relativdrehung bezüglich einander gekoppelte Sekundärseite (24), wobei die Dämpferfluidanordnung ein ein Drehmoment zwischen der Primärseite (16) und der Sekundärseite (24) übertragendes erstes Dämpferfluid mit geringerer Kompressibilität in einer ersten Dämpferfluidkammeranordnung (36) umfasst sowie ein bei Druckerhöhung des ersten Dämpferfluids in der ersten Dämpferfluidkammeranordnung (36) belastetes zweites Dämpferfluid mit höherer Kompressibilität in einer zweiten Dämpferfluidkammeranordnung (76) umfasst, wobei die zweite Dämpferfluidkammeranordnung (76) wenigstens eine Kammereinheit (46) und in Zuordnung zu dieser ein das erste Dämpferfluid von dem zweiten Dämpferfluid trennendes und bei Druckveränderung in der Kammereinheit (46) verlagerbares Trennelement (48) umfasst, wobei die erste Dämpferfluidkammeranordnung (36) wenigstens eine Druckkammer (32', 32", 34', 34") mit bei Relativdrehung der Primärseite (16) bezüglich der Sekundärseite (24) veränderbarem Volumen und in Zuordnung zu dieser eine Verbindungskammer (60, 62, 64, 66) umfasst zur Aufnahme von bei Verringerung des Volumens der wenigstens einen Druckkammer (32', 32", 34', 34") aus dieser verdrängtem erstem Dämpferfluid zur Beaufschlagung des Trennelements (48) der wenigstens einen Kammereinheit (46), wobei im Strömungsweg zwischen der wenigstens einen Druckkammer (32', 32", 34', 34") und der dieser zugeordneten Verbindungskammer (60, 62, 64, 66) eine Drosseleinheit (120) mit in Abhängigkeit von einer Volumenänderung der wenigstens einen Druckkammer (32', 32", 34', 34") veränderbarer Drosselwirkung vorgesehen ist.

2. Torsionsschwingungsdämpferanordnung nach Anspruch 1,
**dadurch gekennzeichnet, dass** die Drosseleinheit (120) bei geringerer Volumenänderung eine geringere Drosselwirkung aufweist und bei größerer Volumenänderung eine größere Drosselwirkung aufweist.

3. Torsionsschwingungsdämpferanordnung nach Anspruch 1 oder 2,
**dadurch gekennzeichnet, dass** die Drosseleinheit (120) im Wesentlichen zwischen einer geringeren Drosselwirkung und einer größeren Drosselwirkung schaltbar ist.

4. Torsionsschwingungsdämpferanordnung nach einem der Ansprüche 1 bis 3,
**dadurch gekennzeichnet, dass** die Drosseleinheit (120) einen wenigstens eine erste Drosselöffnung (124, 126) mit größerem Drosselquerschnitt aufweisenden Drosselkörper (122) umfasst und ein bezüglich des Drosselkörpers (122) verlagerbares Drosselement (128) mit einer zweiten Drosselöffnung (134) mit kleinerem Drosselquerschnitt umfasst, wobei das Drosselelement (128) die wenigstens eine erste Drosselöffnung (124, 126) freigibt zur Bereitstellung einer im Wesentlichen durch den Drosselquerschnitt der wenigstens einen ersten Drosselöffnung (124, 126) definierten geringeren Drosselwirkung, oder überdeckt zur Bereitstellung einer im Wesentlichen durch den Drosselquerschnitt der zweiten Drosselöffnung (134) definierten größeren Drosselwirkung.

5. Torsionsschwingungsdämpferanordnung nach Anspruch 4,
**dadurch gekennzeichnet, dass** dem Drosselement (128) eine Vorspannanordnung (140, 142) zugeordnet ist zum Vorspannen desselben in eine die wenigstens eine erste Drosselöffnung (124, 126) freigebende Positionierung.

6. Torsionsschwingungsdämpferanordnung nach Anspruch 4 oder 5,
**dadurch gekennzeichnet, dass** der Drosselkörper (122) zwei erste Drosselöffnungen (124, 126) aufweist, wobei dann, wenn das Volumen der wenigstens einen Druckkammer (32', 34", 34', 34") abnimmt, das Drosselelement (128) mit einer (124) der ersten Drosselöffnungen (124, 126) zum Erhöhen der Drosselwirkung zusammenwirken kann, und dann, wenn das Volumen der wenigstens einen Druckkammer (32', 32", 34', 34") zunimmt, das Drosselelement (128) mit der anderen ersten Drosselöffnung (126) zum Erhöhen der Drosselwirkung zusammenwirken kann.

7. Torsionsschwingungsdämpferanordnung nach Anspruch 6,
**dadurch gekennzeichnet, dass** der Drosselkörper (122) ein das Drosselelement (128) verschiebbar aufnehmender Hohlkörper ist, der in Verschieberichtung an beiden Endbereichen jeweils eine erste Drosselöffnung (124, 126) aufweist.

8. Torsionsschwingungsdämpferanordnung nach einem der Ansprüche 1 bis 7,
**dadurch gekennzeichnet, dass** der wenigstens einen Druckkammer (32', 32", 34', 34") eine Quelle (160) für unter Druck stehendes erstes Dämpferfluid zugeordnet ist.

9. Torsionsschwingungsdämpferanordnung nach Anspruch 8,
**dadurch gekennzeichnet, dass** in Strömungsrichtung von der wenigstens einen Druckkammer (32', 32", 34', 34") zu der zugeordneten Verbindungskammer (60, 62, 64, 66) die Quelle (160) für unter Druck stehendes erstes Dämpferfluid vor der Drosseleinheit (120) mit der wenigstens einen Druckkammer (32', 32", 34', 34") verbunden oder verbindbar ist.

10. Torsionsschwingungsdämpferanordnung nach Anspruch 8,
**dadurch gekennzeichnet, dass** in Strömungsrichtung von der wenigstens einen Druckkammer (32', 32", 34', 34") zu der zugeordneten Verbindungskammer (60, 62, 64, 66) die Quelle (160) für unter Druck stehendes erstes Dämpferfluid nach der Drosseleinheit (120) mit der wenigstens einen Druckkammer (32', 32", 34', 34") verbunden oder verbindbar ist.

11. Torsionsschwingungsdämpferanordnung nach einem der Ansprüche 1 bis 10,
**dadurch gekennzeichnet, dass** die erste Dämpferfluidkammeranordnung wenigstens eine erste Druckkammer (32', 32") umfasst, deren Volumen bei Relativdrehung der Primärseite (16) bezüglich der Sekundärseite (24) in einer ersten Relativdrehrichtung verringerbar ist, und wenigstens eine zweite Druckkammer (34', 34") umfasst, deren Volumen bei Relativdrehung der Primärseite (16) bezüglich der Sekundärseite (24) in einer der ersten Relativdrehrichtungen entgegengesetzten zweiten Relativdrehrichtung verringerbar ist.

12. Torsionsschwingungsdämpferanordnung nach Anspruch 10 und Anspruch 8,
**dadurch gekennzeichnet, dass** diejenige Druckkammer (32', 32", 34', 34") von erster Druckkammer (32', 32") und zweiter Druckkammer (34', 34") mit der Quelle (160) für unter Druck stehendes erstes Dämpferfluid verbunden wird, deren Volumen bei Relativdrehung der Primärseite (16) bezüglich der Sekundärseite (24) verringert wird.

13. Torsionsschwingungsdämpferanordnung nach einem der Ansprüche 1 bis 12,
**dadurch gekennzeichnet, dass** die der wenigstens einen Druckkammer (32', 32", 34', 34") zugeordnete Verbindungskammer (60, 62, 64, 66) die wenigstens eine Druckkammer (32', 32", 34', 34") wenigstens bereichsweise radial außen umgebend angeordnet ist und dass die wenigstens eine Kammereinheit (46) der zweiten Dämpferfluidkammeranordnung (76) radial außerhalb der Verbindungskammer (60, 62, 64, 66) angeordnet ist.

14. Torsionsschwingungsdämpferanordnung nach einem der Ansprüche 1 bis 13,
**dadurch gekennzeichnet, dass** die zweite Dämpferfluidkammeranordnung (76) eine Mehrzahl zweiter Kammereinheiten (46) umfasst.

15. Torsionsschwingungsdämpferanordnung nach Anspruch 14,
**dadurch gekennzeichnet, dass** die zweiten Kammereinheiten (46) in Umfangsrichtung aufeinander folgend angeordnet sind.

16. Torsionsschwingungsdämpferanordnung nach einem der Ansprüche 1 bis 14,
**dadurch gekennzeichnet, dass** das der wenigstens einen Kammereinheit (46) zugeordnete Trennelement (48) im Wesentlichen radial verlagerbar ist.

17. Torsionsschwingungsdämpferanordnung nach einem der Ansprüche 1 bis 16,
**dadurch gekennzeichnet, dass** eine Seite von Primärseite (16) und Sekundärseite (24) ein erstes im Wesentlichen zylindrisches Kammergehäuse (10) umfasst und dass die andere Seite von Primärseite (16) und Sekundärseite (24) ein in das erste Kammergehäuse (20) eingesetztes und mit diesem einen Ringraum (26) begrenzendes zweites im Wesentlichen zylindrisches Kammergehäuse (22) umfasst, wobei an dem ersten Kammergehäuse (20) wenigstens ein auf das zweite Kammergehäuse (22) zu sich erstreckender erster Umfangsbegrenzungsvorsprung (28', 28") vorgesehen ist und an dem zweiten Kammergehäuse (22) wenigstens ein auf das erste Kammergehäuse (20) zu sich erstreckender zweiter Umfangsbegrenzungsvorsprung (30', 30") vorgesehen ist, wobei zwischen jeweils einem ersten Umfangsbegrenzungsvorsprung (28', 28") und einem zweiten Umfangsbegrenzungsvorsprung (30', 30") eine Druckkammer (32', 32", 34', 34") in Umfangsrichtung begrenzt ist und das Volumen der Druckkammer (32', 32", 34', 34") durch Relativumfangsbewegung der diese begrenzende Umfangsbegrenzungsvorsprünge (28', 28", 30', 30") veränderbar ist.
